# EUROPÄISCHE PATENTSCHRIFT

(11) **EP 3 135 731 B1**
(45) Veröffentlichungstag und Bekanntmachung des Hinweises auf die Patenterteilung: **01.11.2017**
(21) Anmeldenummer: 15183123.7
(22) Anmeldetag: 31.08.2015
(51) Int. Cl.: C08L 77/06, C08G 69/26, C08K 7/28

(54) **POLYAMIDFORMMASSE UND DARAUS HERSTELLBARE FORMKÖRPER**
POLYAMIDE MOULDING MATERIAL AND MOLDED BODIES MADE THEREFROM
MASSES MOULEES EN POLYAMIDE ET CORPS DE FORMAGE AINSI FABRIQUES

(43) Veröffentlichungstag der Anmeldung: 01.03.2017
(73) Patentinhaber: EMS-PATENT AG, 7013 Domat / Ems (CH)
(72) Erfinder: Sütterlin, Martin, 7000 Chur (CH); Stöppelman, Georg, 7402 Bonaduz (CH); Hala, Ralf, 88161 Lindenberg (DE); Presenz, Ulrich, 7014 Trin (CH)
(74) Vertreter: Pfenning, Meinig & Partner mbB

(56) Entgegenhaltungen:
- EP-A1- 2 365 033
- CN-A- 101 724 258
- KR-A- 20130 078 776
- US-A1- 2007 155 858
- US-A1- 2014 088 244
- MEREDITH S J ET AL: "Property modification of thermoplastics by the use of glass bubbles", RESEARCH DISCLOSURE, MASON PUBLICATIONS, HAMPSHIRE, GB, Bd. 253, Nr. 15, 1. Mai 1985 (1985-05-01), XP007109878, ISSN: 0374-4353

## Beschreibung

Die Erfindung betrifft eine Polyamidformmasse bestehend aus einem amorphen, mikrokristallinen oder teilkristallinen Polyamid oder Mischungen hiervon, mindestens einem Schlagzähmodifikator, Hohlglaskugeln sowie weiteren Zusatzstoffen. Die Erfindung betrifft ebenso aus dieser Polyamidformmasse hergestellte Formkörper.

Aus dem Stand der Technik sind verstärkte, schlagzäh ausgerüstete Polyamidformmassen bekannt, die Eigenschaften wie Steifigkeit oder Zähigkeit optimieren. Dem Gewicht des aus der Formmasse hergestellten Teils wird dabei keine Beachtung geschenkt.

Aus der EP 2 412 757 B1 sind Polyamidformmassen zur Herstellung von Formkörpern mit einer Weichgriffoberfläche bekannt, die aus einem amorphen Polyamid gebildet sind und mit Schlagzähmodifikatoren und Glasfasern zur Verstärkung additiviert sind. Neben guten mechanischen Eigenschaften ermöglichen diese Polyamidformmassen die Herstellung von Formkörpern mit einer sog. Soft-Touch-Oberfläche, die für eine hervorragende Haptik sorgt, was auch insbesondere für tragbare Elektronikgeräte von hoher Bedeutung ist.

Aus der EP 2 778 190 B1 sind Polyamidformmassen bekannt, die aus amorphen Polyamiden gebildet sind, die mit einem Schlagzähmodifikator versetzt sind. Auch diese weisen sehr gute mechanische Eigenschaften auf und können aufgrund ihrer Transparenz für Brillenteile, aber auch für elektronische Geräte wie Mobiltelefone eingesetzt werden.

Die aus dem Stand der Technik bekannten Polyamidformmassen weisen in der Regel bereits gute oder sehr gute mechanische Eigenschaften auf, allerdings geht dies oft einher mit einer Gewichtszunahme der Formkörper aufgrund der zur Verstärkung eingesetzten Additive.

Es war daher Aufgabe der vorliegenden Erfindung, Polyamidformmassen bereit zu stellen, die sehr gute mechanische Eigenschaften besitzen und aus denen Formkörper hergestellt werden können, die ein geringes Gewicht aufweisen.

Diese Aufgabe wird durch die Polyamidformmasse mit dem Merkmal des Anspruchs 1 und die Formkörper mit dem Merkmal des Anspruchs 14 gelöst. In Anspruch 16 werden erfindungsgemäße Verwendungen angegeben. Die weiteren abhängigen Ansprüche zeigen vorteilhafte Weiterbildungen auf.

Erfindungsgemäß wird eine Polyamidformmasse bereit gestellt, die eine Dichte von maximal 0,970 g/cm³, bevorzugt von maximal 0,945 g/cm³, besonders bevorzugt von maximal 0,905 g/cm³ aufweist und aus folgenden Komponenten besteht:
(a) 25 bis 90 Gew.-%, bezogen auf die Summe der Komponenten (a) bis (d), eines amorphen, mikrokristallinen oder teilkristallinen Polyamids oder Mischungen hiervon,
(b) 5 bis 30 Gew.-%, bezogen auf die Summe der Komponenten (a) bis (d), mindestens eines Schlagzähmodifikators,
(c) 5 bis 30 Gew.-%, bezogen auf die Summe der Komponenten (a) bis (d), Hohlglaskugeln sowie
(d) 0 bis 15 Gew.-%, bezogen auf die Summe der Komponenten (a) bis (d), weiterer Zusatzstoffe.

Hierbei addieren sich die Komponenten (a) bis (d) zu 100 Gew.-%.

Eine bevorzugte Ausführungsform der erfindungsgemäßen Polyamidformmasse sieht vor, dass die Komponente (a) eine Dichte von maximal 1,220 g/cm³, bevorzugt von maximal 1,160 g/cm³, besonders bevorzugt von maximal 1,100 g/cm³, und ganz besonders bevorzugt von maximal 1,060 g/cm³ aufweist.

Die Schreibweisen und Abkürzungen für Polyamide und deren Monomere sind in der ISO-Norm 1874-1:2010 festgelegt. So werden unter anderem folgende Abkürzungen für Diamine verwendet MXD für m-Xylylendiamin, MPMD für 2-Methyl-1,5-pentandiamin, MOD für 2-Methyl-1,8-octandiamin, MACM für Bis(4-amino-3-methyl-cyclohexyl)methan, PACM für Bis(4-amino-cyclohexyl)methan, TMDC für Bis(4-amino-3,5-dimethyl-cyclohexyl)methan, ND für 2,2,4-Trimethylhexamethylendiamin und IND für 2,4,4-Trimethylhexamethylendiamin.

Enthalten die Polyamide nur Disäuren und Diamine so ergänzen sich deren molare Anteile auf 50 Mol-% für die Summe alle Diamine und 50 Mol-% für die Summe alle Disäuren und die Summe der Diamin- und Disäure-Anteile ergibt 100 Mol-% für das Polyamid.

Bei den Mengenangaben zu den Disäuren und Diaminen der Polyamide gilt immer, dass die Summe der molaren Anteile aller Diamine gleich der Summe der molaren Anteile aller Disäuren ist.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Polyamiden wiederfindet.

Das amorphe oder mikrokristalline Polyamid ist vorzugsweise ausgewählt aus der Gruppe bestehend aus PA 61, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PATMDC10, PATMDC12, PA TMDC14, PA TMDC18, PA PACM12, PA PACM14, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/ MACMT/12, PA 6I/6T/MACMI/MACMT, PA 6I/6T/MACMI/ MACMT/12, PA MACM6/11, PA MACM6/12, PA MACM10/11, PA MACM10/12, PA MACM10 /1010, PA MACM12/1012, PA MACM 12/1212, PA MACM14/1014, PA MACM 14/1214, PA MACM18/1018, PA 6I/6T/MACMI/MACMT/MACM12/612, PA 6I/6T/MACMI/ MACMT/MACM12, PA MACMI/MACMT/MACM12/12, PA MACMI/ MACMT/MACM12, PA 6I/6T/MACMI/MACMT/12, PA 6I/6T/6N/ MACMI/ MACMT/MACMN, PATMDC12/TMDCT/TMDC36, PA TMDC12/TMDCI, PA TMDC12/TMDCI/TMDC36 und PA TMDC12/TMDCT und Mischungen oder Copolymeren hiervon, wobei das MACM bis zu maximal 35 Mol-% durch PACM und/oder TMDC ersetzt sein kann, bezogen auf die Summe der molaren Anteile aller Monomere von 100 Mol-% und/oder das Laurinlactam ganz oder teilweise durch Caprolactam ersetzt sein kann.

Das amorphe oder mikrokristalline Polyamid ist besonders bevorzugt ausgewählt aus der Gruppe bestehend aus PA MACM10, PA MACM12, PA MACM14, PA MACM18, PA TMDC10, PA TMDC12, PA TMDC14, PA TMDC18, PA PACM12, PA PACM14, PA PACM10/11, PA PACM10/12, PA PACM12/612, PA PACM12/PACM14/612/614, PA MACMI/12, PA MACMT/12, PA MACMI/MACM12, PA MACMT/MACM12, PA MACMI/MACMT/12, PA 6I/6T/MACMI/MACMT, PA 6I/6T/MACMI/ MACMT/12, PA MACM6/11, PA MACM6/12, PA MACM10/11, PA MACM10/12, PA MACM10/1010, PA MACM12/1012, PA MACM 12/1212, PA MACM14/1014, PA MACM 14/1214, PA MACM10/PACM10, PA MACM12/PACM12, PA MACM14/PACM14 und Mischungen oder Copolymeren hiervon, wobei das MACM bis zu maximal 35 Mol-% durch PACM und/oder TMDC ersetzt sein kann, bezogen auf die Summe der molaren Anteile aller Monomere von 100 Mol-% und/oder das Laurinlactam ganz oder teilweise durch Caprolactam ersetzt sein kann.

Das amorphe oder mikrokristalline Polyamid ist ganz besonders bevorzugt ausgewählt aus der Gruppe bestehend aus PA MACM12, PA MACM14, PA MACM18, PATMDC12, PATMDC14, PA PACM12, PA PACM14, PA PACM 12/612, PA PACM12/PACM14/612/614, PA MACM 10/1010, PA MACM12/1012, PA MACM 12/1212, PA MACM14/1014, PA MACM 14/1214, PA MACM10/PACM10, PA MACM12/PACM12, PA MACM14/PACM14 und Mischungen oder Copolymeren hiervon.

Der Anteil des 1,6-Hexandiamins im PA PACM12/612 beträgt bevorzugt 2 bis 45 Mol-%, besonders bevorzugt 4 bis 24 Mol-%, ganz besonders bevorzugt 6 bis 15 Mol-%, wobei die Summe der molaren Anteile aller Monomere 100 Mol-% ergibt. Die Polyamide PA PACM12/612 mit maximal 24 Mol-% 1,6-Hexandiamin sind mikrokristallin.

Der Anteil des 1,6-Hexandiamins im PA PACM12/PACM14/612/614 beträgt bevorzugt 2 bis 45 Mol-%, besonders bevorzugt 4 bis 24 Mol-%, ganz besonders bevorzugt 6 bis 15 Mol-%, wobei die Summe der molaren Anteile aller Monomere 100 Mol-% ergibt. Der Anteil der 1,14-Tetradecandisäure im PA PACM12/PACM14/612/614 beträgt bevorzugt 2 bis 45 Mol-%, besonders bevorzugt 4 bis 24 Mol-%, ganz besonders bevorzugt 6 bis 15 Mol-%, wobei die Summe der molaren Anteile aller Monomere 100 Mol-% ergibt. Die Polyamide PA PACM12/PACM14/612/614 mit maximal 24 Mol-% 1,6-Hexandiamin sind mikrokristallin.

Die Polyamide PA PACM12, PA PACM14 und PA PACM18 sind mikrokristallin.

Der Anteil des linear aliphatischen Diamins im PA MACM10/1010, PA MACM12/1012, PA MACM 12/1212, PA MACM14/1014, PA MACM 14/1214 beträgt bevorzugt 5 bis 45 Mol-%, besonders bevorzugt 8 bis 27 Mol-%, ganz besonders bevorzugt 10 bis 22 Mol-%, wobei die Summe der molaren Anteile aller Monomere 100 Mol-% ergibt. Die Polyamide PA MACM10/1010, PA MACM12/1012, PA MACM 12/1212, PA MACM14/1014, PA MACM14/1214 mit maximal 27 Mol-% linear aliphatischem Diamin sind amorph.

Der Anteil des PACM im PA MACM10/PACM10, PA MACM12/PACM12 oder PA MACM14/PACM14 beträgt bevorzugt 1 bis 35 Mol-%, besonders bevorzugt 2 bis 25 Mol-%, wobei die Summe der molaren Anteile aller Monomere 100 Mol-% ergibt. Die Polyamide PA MACM10/PACM10, PA MACM12/PACM12 bzw. PA MACM14/PACM14 mit maximal 25 Mol-% PACM sind amorph.

Das teilkristalline Polyamid ist vorzugsweise ausgewählt aus der Gruppe bestehend aus PA 6, PA 46, PA 49, PA 410, PA 411, PA 412, PA 413, PA 414, PA 415, PA 416, PA 418, PA 436, PA 56, PA 510, PA 66, PA 69, PA 610, PA 611, PA 612, PA 613, PA 614, PA 615, PA 616, PA 617, PA 618, PA 1010, PA 66/6, PA 6/66/610, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM13, PA PACM14, PA PACM15, PA PACM16, PA PACM17, PA PACM18, PA PACM36, Polyamiden mit einer 4T-Wiederholungseinheit, Polyamiden mit einer 5T-Wiederholungseinheit, Polyamiden mit einer 6T-Wiederholungseinheit, Polyamiden mit einer 8T-Wiederholungseinheit, Polyamiden mit einer 9T-Wiederholungseinheit, Polyamiden mit einer 10T-Wiederholungseinheit, PA 4T/6T, PA 4T/8T, PA 6T/8T, PA 4T/MPMDT, PA 4T/4I, PA 5T/5I, PA 6T/6I, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 10T/6T/1012/612, Polyetheramiden, Polyetheresteramiden, Polyesteramiden und deren Mischungen oder Copolymeren.

Das teilkristalline Polyamid ist besonders bevorzugt ausgewählt aus der Gruppe bestehend aus PA 6, PA 66, PA 610, PA 611, PA 612, PA 1010, PA 1212, PA 66/6, PA 6/66/610, PA 6/66/12, PA 6/12, PA 11, PA 12 und deren Mischungen oder Copolymeren.

Das teilkristalline Polyamid ist ganz besonders bevorzugt ausgewählt aus der Gruppe bestehend aus PA 612, PA 1010, PA 1212, PA 11, PA 12 und deren Mischungen oder Copolymeren.

Die relative Viskosität der amorphen oder mikrokristallinen Polyamide beträgt 1,35 bis 2,15, bevorzugt 1,40 bis 2,05, besonders bevorzugt 1,45 bis 1,95, ganz besonders bevorzugt 1,50 bis 1,90, gemessen an einer Lösung von 0,5 g Polyamid in 100 ml-Kresol bei 20 °C.

Die relative Viskosität der teilkristallinen Polyamide beträgt 1,40 bis 2,50, bevorzugt 1,45 bis 2,30, besonders bevorzugt 1,60 bis 2,15, gemessen an einer Lösung von 0,5 g Polyamid in 100 ml-Kresol bei 20 °C.

Die amorphen oder mikrokristallinen Polyamide zeigen in der dynamischen Differenz-Kalorimetrie (engl. Differential Scanning Calorimetry, DSC) nach ISO 11357 bei einer Aufheizrate von 20 K/min bevorzugt eine Schmelzwärme von maximal 50 J/g, besonders bevorzugt von maximal 25 J/g, ganz besonders bevorzugt 0 bis 22 J/g.

Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003 .

Bei den für die erfindungsgemässe Polyamideformmasse verwendeten mikrokristallinen Polyamiden beträgt der Schmelzpunkt gemessen nach ISO 11537 bevorzugt maximal 255 °C.

Die amorphen Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357 bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen aufgrund ihrer Amorphizität keinen Schmelzpunkt.

Vorzugsweise enthält das amorphe oder mikrokristalline Polyamid maximal 49 Mol-%, bevorzugt maximal 42 Mol-%, besonders bevorzugt maximal 38 Mol-% aromatischer Dicarbonsäuren, bezogen auf die Summe aller enthaltenen Monomeren von 100 Mol-%.

Vorzugsweise beträgt die Glasübergangstemperatur des amorphen oder mikrokristallinen Polyamids 40 bis 220 °C, besonders bevorzugt 60 bis 200 °C, ganz besonders bevorzugt 105 bis 170 °C, gemessen nach ISO 11357.

Es ist besonders bevorzugt, wenn die Komponente (a) frei von Monomeren mit aromatischem Bestandteil ist.

In einer besonders bevorzugten Ausführungsform der erfindungsgemässen Polyamidformmasse handelt es sich bei der Komponenten (a) um Mischungen von amorphen und/oder mikrokristallinen Polyamiden mit teilkristallinen Polyamiden.

Diese Mischungen aus amorphen oder mikrokristallinen Polyamiden mit teilkristallinen Polyamiden werden bevorzugt ausgewählt aus der Gruppe bestehend aus Mischungen von PA MACM12 mit PA 12, von PA MACM12 mit PA 612, von PA MACM14 mit PA 12, von PA MACM14 mit PA 612, von PA PACM12 mit PA 12, von PA PACM12 mit PA 612, von PA PACM14 mit PA 12, von PA PACM14 mit PA 612, von PA MACMI/12 mit PA 12 und von PA 6I/6T/MACMI/MACMT/ PACMI/PACMT mit PA 12.

Bei den Mischungen von PA MACMI/12 mit PA 12 und von PA 6I/6T/MACMI/MACMT/ PACMI/PACMT mit PA 12 beträgt der amorphe Anteil bevorzugt 8 bis 40 Gew.-%, besonders bevorzugt 10 bis 20 Gew.-%, bezogen auf 100 Gew.-% für die gesamte Mischung.

In einer besonders bevorzugten Ausführungsform der Mischung von PA MACM12 mit PA 12 beträgt der PA 12-Anteil 2 bis 30 Gew.-%, bevorzugt 5 bis 25 Gew.-%, besonders bevorzugt 10 bis 20 Gew.%, bezogen auf 100 Gew.-% für die gesamte Mischung.

Für eine weitere besonders bevorzugte Ausführungsform der Mischung von PA MACM12 mit PA 12 beträgt der PA MACM12-Anteil 8 bis 40 Gew.-%, bevorzugt 10 bis 20 Gew.%, bezogen auf 100 Gew.-% für die gesamte Mischung.

In einer weiteren besonders bevorzugten Ausführungsform der erfindungsgemässen Polyamidformmasse handelt es sich bei der Komponenten (a) um amorphe Polyamide oder mikrokristalline Polyamide oder deren Mischungen.

Die Mischungen aus amorphen oder mikrokristallinen Polyamiden werden bevorzugt ausgewählt aus der Gruppe bestehend aus Mischungen von PA MACM12 mit PATMDC14, von PA MACM10 mit PATMDC14, von PA PACM12 mit PATMDC14 und von PA PACM10 mit PATMDC14.

In einer weiteren besonders bevorzugten Ausführungsform der erfindungsgemässen Polyamidformmasse handelt es sich bei der Komponenten (a) um teilkristalline Polyamide oder deren Mischungen.

Eine bevorzugte Ausführungsform der erfindungsgemässen Polyamidformmasse sieht vor, dass die Polyamidformmasse frei von Polymeren ist, die Acrylnitril enthalten.

Eine weitere bevorzugte Ausführungsform der erfindungsgemässen Polyamidformmasse sieht vor, dass die Polyamidformmasse von 43 bis 83,9 Gew.-%, insbesondere von 54 bis 79,7 Gew.-% der Komponente (a), jeweils bezogen auf die Summe der Komponenten (a) bis (d), enthält.

Der mindestens eine Schlagzähmodifikator ist vorzugsweise ausgewählt aus der Gruppe bestehend aus Polyethylen, Polypropylen, Polyolefin-Copolymeren, Acrylat-Copolymeren, Acrylsäure-Copolymeren, Vinylacetat-Copolymeren, Styrol-Copolymeren, Styrol-Blockcopolymeren, ionischen Ethylen-Copolymeren in denen die Säuregruppen teilweise mit Metallionen neutralisiert sind, Kern-Mantel-Schlagzähmodifikatoren und Mischungen davon.

Dabei enthält die Polyamidformmasse vorzugsweise von 7 bis 25 Gew.-%, insbesondere von 10 bis 20 Gew.-% des mindestens einen Schlagzähmodifikators, jeweils bezogen auf die Summe der Komponenten (a) bis (d).

Der mindestens eine Schlagzähmodifikator besitzt vorzugsweise eine Dichte von maximal 1,000 g/cm³, bevorzugt von maximal 0,950 g/cm³, besonders bevorzugt von maximal 0,915 g/cm³ und ganz besonders bevorzugt von maximal 0,890 g/cm³ aufweist.

Der mindestens eine Schlagzähmodifikator ist vorzugsweise funktionalisiert, entweder durch Copolymerisation oder durch Pfropfen mit ungesättigten Carbonsäuren, ungesättigten Carbonsäurederivaten und/oder ungesättigten Glycidylverbindungen.

Der mindestens eine Schlagzähmodifikator kann auch in Form einer Mischung oder eines Blends von unfunktionalisierten und/oder funktionalisierten Schlagzähmodifikatoren eingesetzt werden.

Erfolgt die Funktionalisierung durch Copolymerisation liegt der Gewichtsanteil jedes einzelnen zur Funktionalisierung eingesetzten Comonomers, d.h. der ungesättigten Carbonsäuren, ungesättigten Carbonsäurederivate und/oder ungesättigten Glycidylverbindungen bei 3 bis 25 Gew.-%, bevorzugt bei 4 bis 20 Gew.-%, besonders bevorzugt bei 4,5 bis 15 Gew.-%, bezogen auf den gesamten Schlagzähmodifikator.

Erfolgt die Funktionalisierung durch Pfropfung liegen vorteilhafte Funktionalisierungsgrade, also die Gewichtsanteile der ungesättigten Carbonsäuren, ungesättigten Carbonsäurederivate und/oder ungesättigten Glycidylverbindungen bezogen auf den gesamten Schlagzähmodifikator bei 0,3 bis 2,5 Gew.-%, bevorzugt bei 0,4 bis 2,0 Gew.-%, besonders bevorzugt bei 0,5 bis 1,9 Gew.-%.

Durch Copolymersiation funktionalisierte Schlagzähmodifikatoren können zusätzlich auch noch durch Pfropfung funktionalisiert sein.

Die zur Funktionalisierung verwendeten ungesättigten Carbonsäuren, ungesättigten Carbonsäurederivate und/oder ungesättigten Glycidylverbindungen sind vorzugsweise ausgewählt aus der Gruppe bestehend aus ungesättigten Carbonsäureestern, ungesättigten Carbonsäureanhydriden, Acrylsäure, Methacrylsäure, Glycidylacrylsäure, Glycidylmethacrylsäure, Acrylsäureestern, Methacrylsäureestern, alpha-Ethylacrylsäure, Maleinsäure, Maleinsäureanhydrid, Fumarsäure, Itaconsäure, Citraconsäure, Aconitsäure, Tetrahydrophthalsäure und/oder Butenylsuccinsäure.

Die Bedingungen, unter denen die Copolymerisation oder Pfropfung abläuft, sind dem Fachmann hinlänglich bekannt.

Die Polyolefin-Copolymeren sind bevorzugt ausgewählt aus der Gruppe bestehend aus Ethylen-α-Olefin-Copolymeren, Propylen-α-Olefin-Copolymeren, Ethylen-Propylen-Copolymeren, Ethylen-Propylen-Dien-Copolymeren und deren Mischungen, wobei die α-Olefine bevorzugt 3 bis 18 Kohlenstoffatome besitzen. Besonders bevorzugt sind die α-Olefine ausgewählt aus der Gruppe bestehen aus Propen, 1-Buten, 1-Penten, 1-Hexen, 1-Octen, 1-Decen 1-Dodecen und Mischungen davon.

Beispiele für Ethylen-α-Olefin-Copolymere sind lineare Polyethylene mit mittleren Dichten (PE-LMD), lineare Polyethylene mit niedrigen Dichten (PE-LLD), lineare Polyethylene mit sehr niedrigen Dichten (PE-VLD), lineare Polyethylene mit ultra niedrigen Dichten (PE-ULD), Ethylen-Propylen-Copolymere oder Ethylen-1-Buten-Copolymere.

Unter den Ethylen-α-Olefin-Copolymeren sind Ethylen-Propylen-Copolymere, Ethylen-1-Buten-Copolymere oder Ethylen-Propylen-1-Buten-Copolymere bevorzugt.

Unter den Ethylen-Propylen-1-Buten-Copolymeren sind Copolymere bevorzugt, in denen die Monomere Ethylen e), Propylen f) und 1-Buten g) in folgenden molaren Anteilen verwendet werden:
e) Ethylen: 65-90 mol-%, bevorzugt 65-87 mol-%, besonders bevorzugt 71-84 mol-%,
f) Propylen: 8-33 mol-%, bevorzugt 10-25 mol-%, besonders bevorzugt 12-20 mol-%, sowie
g) 1-Buten: 2-25 mol-%, bevorzugt 3-20 mol-%, besonders bevorzugt 4-15 mol-%, ganz besonders bevorzugt 4-9 mol-%,
und wobei sich die Komponenten e), bis g) zu 100 mol-% addieren.

Das Ethylen-Propylen-1-Buten-Copolymere kann die genannten Monomere d) bis f) in den angegebenen bevorzugten molaren Anteilen enthalten, jedoch ist in der Bezeichnung Ethylen-Propylen-1-Buten-Copolymer ebenso die Möglichkeit umfasst, dass mehrere Copolymere gemischt werden, die jeweils zwei der Monomere e) bis g), d.h. e) und f), e) und g) oder f) und g), enthalten, so dass in der Mischung die Monomere e) bis g) in den bevorzugten molaren Anteilen vorliegen. Besonders bevorzugt besteht solch eine Mischung aus einem Copolymer der Monomere e) und f) und einem Copolymer der Monomere e) und g), so dass in der Mischung die Monomere e) bis g) in den bevorzugten molaren Anteilen vorliegen.

Die Acrylat-Copolymeren, Acrylsäure-Copolymeren oder Vinylacetat-Copolymeren sind bevorzugt ausgewählt aus der Gruppe bestehend aus Ethylen-Acrylsäure-Copolymeren, Ethylen-Methacrylsäure-Copolymeren, Ethylen-Methacrylsäure-Acrylat-Copolymeren, Ethylen-Acrylsäure-AcrylatCopolymere, Ethylen-Glycidyl-Methacrylat-Copolymere, Ethylen- Acrylsäureester-Glycidyl-Methacrylat-Copolymere, Ethylen-Vinylacetat-Copolymeren, Ethylen-Acrylat-Copolymeren und deren Mischungen.

Die Styrol-Copolymeren sind bevorzugt ausgewählt aus der Gruppe bestehend aus Styrol-Copolymeren mit Butadien, Isopren und Acrylat.

Die Styrol-Blockcopolymeren sind bevorzugt ausgewählt aus der Gruppe bestehend aus Styrol-Butadien-Styrol-Triblockcopolymeren (SBS), Styrol-Isopren-Styrol-Triblockcopolymeren (SIS), Styrol-Ethylen/Butylen-Styrol-Triblockcopolymer (SEBS) und Styrol-Ethylen/Popylen-Styrol-Triblockcopolymer (SEPS).

Bei den Styrol-Ethylen/Butylen-Styrol-Triblockcopolymeren handelt es sich um lineare Triblockcopolymere aus einem Ethylen/Butylen-Block und zwei Styrolblöcken.

Bei den Styrol-Ethylen/Propylen-Styrol-Triblockcopolymeren handelt es sich um lineare Triblockcopolymere aus einem Ethylen/Propylen-Block und zwei Styrolblöcken.

Der Styrolanteil in den Styrol-Ethylen/Butylen-Styrol-Triblockcopolymeren oder Styrol-Ethylen/Popylen-Styrol-Triblockcopolymeren beträgt bevorzugt 20 bis 45 Gew.-%, besonders bevorzugt 25 bis 40 Gew.-% und ganz besonders bevorzugt 25 bis 35 Gew.-% beträgt.

Die Styrol-Ethylen/Butylen-Styrol-Triblockcopolymere weisen bevorzugt eine Schmelze-Volumenfließrate von 90 bis 160 cm³/10min, besonders bevorzugt von 100 bis 150 cm³/10min und ganz besonders bevorzugt von 110 bis 140 cm³/10min auf. Die Schmelz-Volumenfließrate wurde bei 275°C und 5 kg nach ISO 1133 gemessen.

Die ionischen Ethylen-Copolymeren bestehen bevorzugt aus Ethylen, Propylen, Butylen, Acrylsäure, Acrylat, Methacrylsäure und/oder Methacrylat in denen die Säuregruppen teilweise mit Metallionen neutralisiert sind, besonders bevorzugt sind Ethylen-Methacrylsäure-Copolymere oder Ethylen-Methacrylsäure-Acrylat-Copolymere in denen die Säuregruppen teilweise mit Metallionen neutralisiert sind. Bei den zur Neutralisation verwendeten Metallionen handelt es sich bevorzugt um Natrium-, Zink-, Kalium-, Lithium oder Magnesium-Ionen, besonders bevorzugt um Natrium-, Zink- oder Magnesium-Ionen.

Bei den Kern-Mantel-Schlagzähmodifikatoren besteht der Kern bevorzugt aus Dienmonomeren, aromatischen Vinylmonomeren, nichtaromatischen Vinylmonomeren und Mischungen davon und gegebenenfalls vernetzenden Monomeren. Bei den Kern-Mantel-Schlagzähmodifikatoren besteht der Mantel bevorzugt aus aromatischen Vinylmonomeren, nichtaromatischen Vinylmonomeren und Mischungen davon und gegebenenfalls vernetzenden Monomeren.

Die Dienmonomere sind bevorzugt ausgewählt aus der Gruppe bestehend aus Butadien und Isopren und Mischungen davon.

Die aromatischen Vinylmonomeren sind bevorzugt ausgewählt aus der Gruppe bestehend aus Styrol, α-Methylstyrol, p-Methylstyrol, Ethylstyrol, tert.-Butylstyrol, Diphenylethylen, Vinyltoluol, Vinylxylol, Vinylnaphthalin, Isopropenylnaphthalin, Divinylbenzol, Vinylacetat, Phenylacrylat, Phenylmethacrylat und Mischungen davon.

Die nichtaromatischen Vinylmonomeren sind bevorzugt ausgewählt aus der Gruppe bestehend aus Acrylsäure, Alkylacrylaten, Methacrylsäure, Alkylmethacrylaten und Mischungen davon.

Die nichtaromatischen Vinylmonomeren sind besonders bevorzugt ausgewählt aus der Gruppe bestehend aus Acrylsäure, Ethylacrylat, Propylacrylat, n-Butylacrylat, iso-Butylacrylat, 2-ethylhexylacrylat, n-Octylacrylat, Decylacrylat, Laurylacrylat, Stearylacrylat, Methacrylsäure, Methylmethacrylat, Ethylmethacrylat, Propylmethacrylat, n-Butylmethacrylat, isoButylmethacrylat, Laurylmethacrylat, Stearylmethacrylat, iso-Bornylmethacrylat und Mischungen davon.

Die vernetzenden Monomeren sind bevorzugt ausgewählt aus der Gruppe bestehend aus Divinylbenzol, Diallylmaleat, Butylenglycoldiacrylat, Etylenglycoldimethacrylat, Allylmethacrylat und Mischungen davon.

Sobald die als Schlagzähmodifikator verwendeten Copolymere Diene als Monomere enthalten, werden sie bevorzugt in hydrierter, vernetzter oder vulkanisierter Form in den erfindungsgemässen Polyamidformmassen eingesetzt.

In einer besonders bevorzugten Ausführungsform der erfindungsgemässen Polyamidformmasse wird der Schlagzähmodifikator ausgewählt aus der Gruppe bestehend aus
- Styrol-Ethylen/Butylen-Styrol-Triblockcopolymeren mit 20 bis 45 Gew.-% Styrol, gepfropft mit 0,3 bis 2,5 Gew.-% Maleinsäureanhydrid,
- Ethylen-Propylen-1-Buten-Copolymeren in denen die Monomere Ethylen e), Propylen f) und 1-Buten g) in folgenden molaren Anteilen verwendet werden:
   e) Ethylen: 65-90 mol-%, bevorzugt 65-87 mol-%, besonders bevorzugt 71-84 mol-%,
   f) Propylen: 8-33 mol-%, bevorzugt 10-25 mol-%, besonders bevorzugt 12-20 mol-%, sowie
   g) 1-Buten: 2-25 mol-%, bevorzugt 3-20 mol-%, besonders bevorzugt 4-15 mol-%, ganz besonders bevorzugt 4-9 mol-%,
   wobei sich die Komponenten e) bis g) zu 100 mol-% addieren und die Ethylen-Propylen-1-Buten-Copolymeren mit 0,3 bis 2,5 Gew.-% Maleinsäureanhydrid gepfropft sind, und
- Ethylen-1-Buten-Copolymeren gepfropft mit 0,3 bis 2,5 Gew.-% Maleinsäureanhydrid.

In einer besonders bevorzugten Ausführungsform der erfindungsgemässen Polyamidformmasse wird der Schlagzähmodifikator ausgewählt aus der Gruppe bestehend aus
- einem Styrol-Ethylen/Butylen-Styrol-Triblockcopolymer mit 20 bis 35 Gew.-% Styrol, gepfropft mit 1,4 bis 1,9 Gew.-% Maleinsäureanhydrid ,
- Ethylen-Propylen-1-Buten-Copolymeren bestehend aus 71-84 mol-% Ethylen e), 12-20 mol-% Propylen f) sowie 4 - 9 mol-% 1-Buten g), wobei sich die Komponenten e) bis g) zu 100 mol-% addieren und die Ethylen-Propylen-1-Buten-Copolymeren mit 0,3 bis 0,9 Gew.-% Maleinsäureanhydrid gepfropft sind, und
- Ethylen-1-Buten-Copolymeren gepfropft mit 0,9 bis 1,5 Gew.-% Maleinsäureanhydrid.

In einer weiteren besonders bevorzugten Ausführungsform der erfindungsgemäßen Polyamidformmasse wird der Schlagzähmodifikator ausgewählt aus der Gruppe bestehend aus
- einem Styrol-Ethylen/Butylen-Styrol-Triblockcopolymer mit 30 Gew.-% Styrol, gepfropft mit 1,7 Gew.-% Maleinsäureanhydrid,
- einem Blend aus Ethylen-Propylen-Copolymer und Ethylen-1-Buten-Copolymer im Gewichtsverhältnis 67 : 33, gepfropft mit 0,6 Gew.-% Maleinsäureanhydrid, und
- einem Ethylen-1-Buten-Copolymeren gepfropft mit 1,2 Gew.-% Maleinsäureanhydrid.

Es ist weiterhin bevorzugt, dass die Polyamidformmasse von 8 bis 25 Gew.-%, insbesondere von 10 bis 20 Gew.-%, jeweils bezogen auf die Summe der Komponenten (a) bis (d), Hohlglaskugeln enthält.

Hierbei weisen die Hohlglaskugeln vorzugsweise eine Druckfestigkeit von mindestens 100 MPa und besonders bevorzugt von mindestens 110 MPa auf, gemessen nach ASTM D 3102-72 in Glycerin. Die Hohlglaskugeln weisen vorzugsweise einen mittleren volumetrischen Durchmesser (d₅₀) von 10 bis 80 µm, bevorzugt 13 bis 50 µm auf, gemessen mittels Laserbeugung nach ASTM B 822.

Die Hohlglaskugeln können oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyether, Epoxiden, Nickel respektive Kombinationen oder Mischungen davon verwendet werden. Bevorzugt sind die Hohlglaskugeln mit Aminosilanen, Epoxisilanen, Polyamiden oder Mischungen davon oberflächenbehandelt.

Bevorzugt bestehen die Hohlglaskugeln aus Borsilikatglas und sind mit Aminosilanen, Epoxisilanen oder Polyamiden oberflächenbehandelt, besonders bevorzugt aus Natriumcarbonat-Calciumoxid-Borsilikatglas und sind mit Aminosilanen, Epoxisilanen oder Polyamiden oberflächenbehandelt.

Die Reindichte der Hohlglaskugeln beträgt bevorzugt 0,10 bis 0,65 g/cm³, besonders bevorzugt 0,20 bis 0,55 g/cm³, ganz besonders bevorzugt 0,30 bis 0,50 g/cm³, gemessen nach ASTM D 2840-69 mit einem Gaspyknometer und Helium als Messgas.

Aus der Polyamidformmasse hergestellte Prüfkörper besitzen vorzugsweise eine Schlagzähigkeit nach Charpy, gemessen nach ISO 179, von mindestens 30 kJ/m², bevorzugt von mindestens 50 kJ/m² und besonders bevorzugt von mindestens 60 kJ/m² und/oder einen Zug-E-Modul von mindestens 750 MPa, bevorzugt 1200 MPa und besonders bevorzugt 1650 MPa und/oder eine Reißfestigkeit von mindestens 20 MPa, bevorzugt 30 MPa und besonders bevorzugt 40 MPa und/oder eine Reißdehnung von mindestens 3 %, bevorzugt mindestens 5 % und besonders bevorzugt 11 %, jeweils gemessen nach ISO 527.

Der Vorteil der Verwendung von Hohlglaskugeln zur Verringerung der Dichte der Polyamidformmasse gegenüber der Verwendung von Schlagzähmodifikator besteht darin, das die Hohlglaskugeln den Zug-E-Modul der resultierenden Polyamidformmasse nicht absenken, sondern im Gegenteil etwas anheben.

Die Polyamidformmasse kann weiterhin Zusatzstoffe enthalten, die vorzugsweise ausgewählt sind aus der Gruppe bestehend aus anorganischen Stabilisatoren, organischen Stabilisatoren, insbesondere Antioxidantien, Antiozonantien, Lichtschutzmittel, UV-Stabilisatoren, UV-Absorber oder UV-Blocker, IR-Absorber, NIR-Absorber, Antiblockmitteln, Nukleierungsmitteln, Kristallisationsbeschleunigern, Kristallisationsverzögerern, Kondensationskatalysatoren, Kettenreglern, Entschäumern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, Kohlenstofffasern, Titandioxid, Zinksulfid, Zinkoxid, Bariumsulfat, photochromen Agenzien, Antistatika, Entformungsmitteln, optischen Aufhellern, halogenfreien Flammschutzmitteln, metallischen Pigmenten, Metallflittern, metallbeschichteten Partikeln, Füll- und Verstärkungsstoffen, natürlichen Schichtsilikaten, synthetischen Schichtsilikaten und deren Mischungen.

Die erfindungsgemäßen Polyamidformmassen zeichnen sich neben der geringen Dichte und den guten mechanischen Eigenschaften, insbesondere der guten Zähigkeit, auch noch durch eine Reihe verbesserter Eigenschaften aus wie erhöhter Formstabilität bzw. Maßhaltigkeit, Abriebfestigkeit, Oberflächenhärte, Fließfähigkeit der Schmelze, Isolationsfähigkeit, sowohl gegenüber Temperatur als auch Schall, geringer sowie isotroper Schwindung und verringerter Wärmeausdehnung aus.

Geeignete Verarbeitungsmethoden für die erfindungsgemäßen Polyamidformmassen sind Spritzguss, Extrusion, Schichtung, Lamination, Kaschierung und Extrusionsblasformen.

Die erfindungsgemäßen Polyamidformmassen eignen sich zur Herstellung von Formkörpern wie Folien, Profilen, Rohren, Behältern, Halbzeugen, Fertigteilen oder Hohlkörpern sowie zur Beschichtung von Formkörpern.

Die erfindungsgemäßen Polyamidformmassen können vor allem in den Bereichen Industrie, Haushalt, Sanitär, Optik, Uhren, Elektro, Elektronik, Elektrooptik, Fahrzeuge, Maschinenbau, Mode, Sport und Freizeit, Mess- und Prüfmittel und Spielwaren eingesetzt werden.

Erfindungsgemäß werden ebenso Formkörper bereit gestellt, die aus den zuvor beschriebenen Polyamidformmassen herstellbar sind. Diese Formkörper sind vorzugsweise ausgewählt, aus der Gruppe bestehend aus Brillenteilen, insbesondere Brillenfassungen, Brillenrahmen oder Brillenbügeln, insbesondere für Sicherheitsbrillen, Sportbrillen oder Skibrillen, Sportgeräten, insbesondere Skischuhen, Tourenskischuhen, Snowboardschuhen oder Helmen, Gehäusen, Gehäuseteilen, Rahmen, Schutzgehäusen, Abdeckungen oder Verkleidungselementen, insbesondere für Elektrogeräte, Elektronikgeräte, elektrooptische Geräte, elektrooptische Bauteile, Büroautomatisierungsgeräte, Unterhaltungselektronik, tragbare Computer, insbesondere Laptops, Notebooks, Netbooks und Tablet-PCs, Spielkonsolen, Navigationsgeräte, Messgeräte, persönliche digitale Assistenzgeräte, Telekommunikationsgeräte, Kameras, (Armband-)Uhren, Rechner, elektronische Speichergeräte, Keyboards, Musik-Recorder, digitale Musik-Abspiel-geräte (z.B. CD- und MP3-Player), E-Books, Mobiltelefone oder Smartphones.

Die erfindungsgemäßen Polyamidformmassen sind opak, also undurchsichtig und somit nicht transparent.

### Herstellung der erfindungsgemäßen Polyamidformmasse

Zur Herstellung der erfindungsgemäßen Polyamidformmasse werden die Komponenten a) bis c) und gegebenenfalls d) auf üblichen Compoundiermaschinen, wie z.B. ein- oder zweiwelligen Extrudern oder Schneckenknetern gemischt. Die Komponenten a) bis c) und gegebenenfalls d) werden dabei einzelnen über gravimetrische Dosierwaagen in den Einzug oder jeweils in einen Sidefeeder dosiert oder in Form eines Dryblends zugeführt. Die Komponente c) (Hohlglaskugeln) wird bevorzugt über einen Sidefeeder in die Polymerschmelze dosiert.

Werden Zusatzstoffe (Komponente d)) verwendet, können diese direkt oder in Form eines Masterbatches eingebracht werden. Bei dem Trägermaterial des Masterbatches handelt es sich bevorzugt um ein Polyolefin oder ein Polyamid. Unter den Polyamiden eignen sich dazu besonders das Polyamid der jeweiligen Komponenten a), PA 6, PA 11, PA 12, PA 69, PA 6/69, oder PA 6/12.

Zur Dryblend-Herstellung werden die getrockneten Granulate der Komponenten a) und/oder b) und gegebenenfalls weitere Zusatzstoffe (Komponente d)) in einem geschlossenen Behälter vermischt. Diese Mischung wird mittels eines Taumelmischers, Rhönradmischers oder Taumeltrockners 10 - 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 200 bis 350 °C, wobei die Temperatur des ersten Zylinders unter 200 °C eingestellt werden kann. Vor der Düse kann Vakuum angelegt oder atmosphärisch entgast werden. Die Schmelze wird in Strangform ausgetragen, im Wasserbad bei 10 bis 80 °C abgekühlt und anschließend granuliert. Das Granulat wird für 12 bis 24 Stunden bei 80 bis 120 °C unter Stickstoff oder im Vakuum auf einen Wassergehalt von unter 0.1 Gew.-% getrocknet.

Die Verarbeitung der erfindungsgemäßen Polyamidformmassen im Spritzguss erfolgt bei Zylindertemperaturen von 200 bis 350 °C und Werkzeugtemperaturen von 40 bis 140 °C.

Anhand der nachfolgenden Beispiele soll der erfindungsgemäße Gegenstand näher beschrieben werden, ohne diesen auf die hier gezeigten spezifischen Ausführungsformen einschränken zu wollen.

In den Tabelle 1 und 2 sind die in den Beispielen und Vergleichsbeispielen eingesetzten Komponenten aufgeführt.

Die Hohlglaskugeln (c1) und (c2) wurden vor der Verwendung mit einer Aminosilanschlichte versehen.

**Tabelle 1**

| **Komponenten** | **Beschreibung** | **Hersteller** |
|---|---|---|
| Polyamid (a1) | amorphes Polyamid MACM12 aus Bis(3-methyl-4-aminocyclohexyl)-methan und Dodecandisäure | EMS-CHEMIE AG, Schweiz |
| | RV* 1,70 (gemessen mit 0,5 g in 100 ml m-Kresol bei 20 °C) | |
| | Glasübergangstemperatur 155 °C | |
| | Dichte 1,00 g/cm³ | |
| Polyamid (a2) | amorphes Polyamid MACMI/MACMT/12 im Molverhältnis 38/38/24 aus Bis(3-methyl-4-amino-cyclohexyl)methan, Isophthalsäure, Terephthalsäure und Laurinlactam | EMS-CHEMIE AG, Schweiz |
| | RV* 1,53 (gemessen mit 0,5 g in 100 ml m-Kresol bei 20 °C) | |
| | Glasübergangstemperatur 194 °C | |
| | Dichte 1,06 g/cm³ | |
| Polyamid (a3) | Polyamid 612 aus 1,6-Hexandiamin und 1,12-Dodecandisäure | EMS-CHEMIE AG, Schweiz |
| | RV* 1,79 (gemessen mit 0,5 g in 100 ml m-Kresol bei 20 °C) | |
| | Schmelzpunkt 220 °C | |
| | Dichte 1,06 g/cm³ | |
| Polyamid (a4) | Polyamid 1010 aus 1,10-Decandiamin und 1,10-Decandisäure | EMS-CHEMIE AG, Schweiz |
| | RV 1,54 (gemessen mit 0,5 g in 100 ml m-Kresol bei 20 °C) | |
| | Schmelzpunkt 200 °C | |
| | Dichte 1,05 g/cm³ | |
| Polyamid (a5) | PA 12 aus Laurinlactam | EMS-CHEMIE AG, Schweiz |
| | RV 2,10 (gemessen mit 0,5 g in 100 ml m-Kresol bei 20 °C) | |
| | Schmelzpunkt 178 °C | |
| | Dichte 1,01 g/cm³ | |
| Polyamid (a6) | PA 12 aus Laurinlactam | EMS-CHEMIE AG, Schweiz |
| | RV 1,65 (gemessen mit 0,5 g in 100 ml m-Kresol bei 20 °C) | |
| | Schmelzpunkt 178 °C | |
| | Dichte 1,01 g/cm³ | |
| SEBS-MAH (b1) | Styrol-Ethylen/Butylen-Styrol-Blockcopolymer mit 30 Gew-% Styrol | Kraton Polymers LLC, USA |
| | 1,7 Gew.-% Maleinsäureanhydrid | |
| | MVR**** 130 cm³/10min bei 275 °C und 5 kg | |
| | Dichte 0,910 g/cm³ | |
| | Handelsname Kraton FG1901 GT | |

**Tabelle 2**

| **Komponenten** | | **Beschreibung** | **Hersteller** |
|---|---|---|---|
| E/P-E/B-MAH (b2) | | Blend aus Ethylen/Propylen-Copolymer und Ethylen/But-1-en-Copolymer im Gewichtsverhältniss 67 : 33 | Mitsui Chemicals, Japan |
| | | ca. 81 Mol-% Ethylen | |
| | | 0,6 Gew.-% Maleinsäureanhydrid | |
| | | MVR**** 13 cm³/10min bei 275 °C und 5 kg | |
| | | Dichte 0,875 g/cm³ | |
| | | Handelsname Tafmer MC201 | |
| E/B-g-MAH (b3) | | Ethylen-1-Buten-Copolymer | Mitsui Chemicals, Japan |
| | | 1.2 Gew.-% Maleinsäureanhydrid | |
| | | Dichte 0.866 g/cm³ | |
| | | MFR 1.2 g/10 min bei 230°C und 2,16 kg gemessen nach | |
| | | ASTM D 1238 | |
| | | Handelsname Tafmer MH5020C | |
| Hohlglaskugeln (c1) | | Hohlglaskugeln aus Natriumcarbonat-Calciumoxid-Borsilikatglas | 3M Deutschland GmbH, Deutschland |
| | | Druckfestigkeit** 110 MPa | |
| | | Mittlerer Kugeldurchmesser*** 20 µm | |
| | | Reindichte***** 0,46 g/cm³ | |
| | | Handelsname iM16K | |
| Hohlglaskugeln (c2) | | Hohlglaskugeln aus Natriumcarbonat-Calciumoxid-Borsilikatglas | Cenostar Corporation, USA |
| | | Druckfestigkeit** 60 MPa | |
| | | Mittlerer Kugeldurchmesser*** 50 µm | |
| | | Reindichte***** 0,60 g/cm³ | |
| | | Handelsname Cenostar C-60 | |
| Hitzestabilisator (d1) | | Bis[3,3-bis-(4'hydroxy-3'-tert-butylphenyl)butansäur]glykolester | Clariant Produkte (Deutschland) GmbH, Deutschland |
| | | CAS-Nr. 32509-66-3 | |
| | | Handelsname Hostanox O 3 P | |
| Hitzestabilisator (d2) | | Tetrakis(2,4-di-*tert*-butylphenyl)-4,4'-biphenyl-diphosphonit | Clariant Produkte (Deutschland) GmbH, Deutschland |
| | | CAS-Nr. 119345-01-6 | |
| | | Handelsname Hostanox P-EPQ | |
| UV-Stabilisator (d3) | | N-(2-ethoxyphenyl)-N'-(2-ethylphenyl)-ethandiamin | BASF Schweiz AG, Schweiz |
| | | CAS-Nr. 23949-66-8 | |
| | | Handelsname Tinuvin 312 | |
| UV-Stabilisator (d4) | | Polymer aus 2,2,4,4-tetramethyl-7-oxa-3,20-diaza-dispiro[5.1.11.2]-heneicosan-21-on und Epichlorhydrin | Clariant Produkte (Deutschland) GmbH, Deutschland |
| | | CAS-Nr. 202483-55-4 | |
| | | Handelsname Hostavin N 30 P | |
| TiO₂-Masterbatch (d5) | | 50 Gew.-% Titandioxid (TiO₂) in PA 12 | Sukano AG, Schweiz |
| | | Handelsname Sukano TA28-10 MB05 | |
| * | RV relative Viskosität, gemessen an einer Lösung von 0,5 g Polyamid in 100 ml m-Kresol bei 20 °C | | |
| ** | 90 Vol.-% unzerstörte Hohlglaskugeln, gemessen nach ASTM D 3102-72 in Glycerin | | |
| *** | volumetrischer d₅₀-Wert, gemessen mit Laserbeugung nach ASTM B 822 | | |
| **** | Schmelze-Volumenrate (Melt Volume Rate) | | |
| ***** | Reindichte, gemessen in einem Gaspyknometer nach ASTM D 2840-69 | | |

### Herstellung der Polyamidformmasse des Beispiels 3

Das getrocknete Granulat des Polyamids (a1) wurde zusammen den Zusatzstoffen (d1) bis (d4) zu einem Dryblend vermischt, und zwar in dem in der Tabelle 2 angegebenen Verhältnis. Diese Mischung wurde mittels eines Taumelmischers ca. 20 Minuten lang homogenisiert.

Die Polyamidformmasse wurde auf einem Zweiwellenextruder der Firma Werner & Pfleiderer Typ ZSK 25 in dem in Tabelle 2 angegeben Verhältnis hergestellt. Das Dryblend wurde dabei über eine Dosierwaage in den Einzug dosiert. Der Schlagzähmodifikator (b2) wurde über eine Dosierwaage ebenfalls in den Einzug dosiert. Die Hohlglaskugeln (c1) wurden über eine Dosierwaage in einen Sidefeeder dosiert, der die Hohlglaskugeln (c1) sechs Gehäuseeinheiten vor der Düse in die Schmelze förderte.
Die Temperatur des ersten Gehäuses wurde auf 100 °C eingestellt, diejenige der restlichen Gehäuse auf 270 bis 300 °C. Es wurde eine Drehzahl von 250 U/min und ein Durchsatz von 10 kg/h verwendet und atmosphärisch entgast. Die Stränge wurden im Wasserbad abgekühlt, geschnitten und das erhaltene Granulat bei 100 °C für 24 h im Vakuum (30 mbar) auf einen Wassergehalt unter 0,1 Gew.-% getrocknet.

### Herstellung der Prüfkörper

Die Prüfkörper wurden auf einer Spritzgussmaschine der Firma Arburg, Modell Allrounder 420 C 1000-250 hergestellt. Dabei wurden zur Herstellung der Formkörper aus den Polyamidformmassen der Beispiele 1 bis 7 und der Vergleichsbeispiele 8 bis 9 aufsteigende Zylindertemperaturen von 225 °C bis 295 °C verwendet. Die Formtemperatur betrug 80 °C. Zur Herstellung der Formkörper aus den Polyamidformmassen der Beispiele 10 bis 16 wurden aufsteigende Zylindertemperaturen von 250 °C bis 270 °C verwendet. Die Formtemperatur betrug 50 °C.

Die Prüfkörper wurden in trockenem Zustand verwendet; dazu wurden sie nach dem Spritzguss mindestens 48 h bei Raumtemperatur in trockener Umgebung, d.h. über Silicagel gelagert.

In dieser Anmeldung verwendete Messmethoden:
Zug-E-Modul:
   ISO 527 mit einer Zuggeschwindigkeit von 1 mm/min
      ISO-Zugstab, Norm: ISO/CD 3167, Typ A1, 170 x 20/10 x 4 mm, Temperatur 23 °C
Reißfestigkeit und Reißdehnung:
   ISO 527 mit einer Zuggeschwindigkeit von 5 mm/min
      ISO-Zugstab, Norm: ISO/CD 3167, Typ A1, 170 x 20/10 x 4 mm, Temperatur 23 °C
Schlagzähigkeit nach Charpy:
   ISO 179/*eU
      ISO-Prüfstab, Norm: ISO/CD 3167, Typ B1, 80 x 10 x 4 mm, Temperatur 23 °C
      * 1 = nicht instrumentiert, 2 = instrumentiert
Kerbschlagzähigkeit nach Charpy:
   ISO 179/*eA
      ISO-Prüfstab, Norm: ISO/CD 3167, Typ B1, 80 x 10 x 4 mm, Temperatur 23 °C
      * 1 = nicht instrumentiert, 2 = instrumentiert
Relative Viskosität:
   ISO 307
      Granulat
      0,5 g in 100 ml m-Kresol
      Temperatur 20 °C
      Berechnung der relativen Viskosität (RV) nach RV = t/t₀ in Anlehnung an Abschnitt 11 der Norm.
Schmelzpunkt, Schmelzwärme und Glasübergangstemperatur (Tg):
   ISO 11357
      Granulat
      Die Differential Scanning Calorimetry (DSC) wurde mit einer Aufheizrate von 20 K/min durchgeführt. Beim Schmelzpunkt wird die Temperatur am Peakmaximum angegeben. Der Mittelpunkt des Glasübergangsbereichs, welcher als Glasübergangstemperatur (Tg) angegeben wird, wurde nach der Methode "Half-step-height" ermittelt.
Dichte:
   ISO 1183-3: 1999
      ISO-Prüfstab, Norm: ISO/CD 3167, Typ B1, 80 x 10 x 4 mm
      Temperatur 23 °C
      Der ISO-Prüfstab wird in etwa gedrittelt, so dass die Teile in die Messkammer des Gaspyknometers passen. Als Meßgas wird Helium verwendet.
MVR (Schmelze-Volumenfließrate bzw. Melt Volume Rate):
   ISO 1133
      Granulat
      Temperatur und Belastung 275 °C und 5 kg
Lichttransmission:
   ASTM D 1003
      Platte, Dicke 2 mm, 60 x 60 mm, hergestellt in einem hochglanzpolierten Werkzeug
      Temperatur 23 °C
      Messgerät Haze Gard plus der Firma Byk Gardner mit CIE Lichtart C. Der Lichttransmissionswert wird in % der eingestrahlten Lichtmenge angegeben.

In Tabelle 3 wurden aus den erfindungsgemäßen Polyamidformmassen hergestellten Prüfkörper mit Prüfkörpern aus nicht-erfindungsgemäßen Polyamidformmassen hinsichtlich der mechanischen Eigenschaften verglichen.

Der Vergleich zwischen den Formmassen von Beispiel 1 und Vergleichsbeispiel 8 bzw. zwischen den Formmassen von Beispiel 2 und Vergleichsbeispiel 9 zeigt eindeutig, dass die Dichte der Polyamidformmasse nur bei Verwendung von Hohlglaskugeln mit einer ausreichenden Druckfestigkeit verringert werden kann.

Die Formmasse des Beispiels 3 mit der funktionalisierten Mischung zweier Ethylen-Copolymere als Schlagzähmodifikator zeigt sehr gute mechanische Eigenschaften, vor allem eine ausgezeichnete Zähigkeit, in diesem Fall gemessen als Schlagzähigkeit bzw. Reißdehnung.

Die Formmassen der Beispiele 4 bis 7 zeigen die hervorragende Wirkung der Kombination aus Schlagzähmodifikator und Hohlglaskugeln zur Dichtreduktion bei Polyamidformmassen.

Die mit PA 12 bzw. einer Mischung aus dem teilkristallinen PA 12 und dem amorphem PA MACM12 als Komponente a) hergestellten Formmassen der Beispiele 10 bis 16 (Tabelle 4) zeigen eine hervorragende Kombination von niedriger Dichte und hoher Zähigkeit, in diesem Fall gemessen als Kerbschlagzähigkeit bzw. Reißdehnung.

**Tabelle 3**

| | | **Beispiele** | | | | | | | **Vergleichsbeispiele** | |
|---|---|---|---|---|---|---|---|---|---|---|
| **Komponenten** | **Einheit** | **1** | **2** | **3** | **4** | **5** | **6** | **7** | **8** | **9** |
| PA MACM12 (a1) | Gew.-% | 79 | 64 | 79 | - | - | - | - | 79 | 64 |
| PA MACMI/MACMT/12 (a2) | Gew.-% | - | - | - | 79 | 79 | - | - | - | - |
| PA 612 (a3) | Gew.-% | - | - | - | - | - | 79 | - | - | - |
| PA 1010 (a4) | Gew.-% | - | - | - | - | - | - | 79 | - | - |
| SEBS-MAH (b1) | Gew.-% | 10 | 20 | - | 10 | 20 | 10 | 10 | 10 | 20 |
| E/P-E/B-MAH (b2) | Gew.-% | - | - | 10 | - | - | - | - | - | - |
| Hohlglaskugeln (c1) | Gew.-% | 10 | 15 | 10 | 10 | 15 | 10 | 10 | - | - |
| Hohlglaskugen (c2) | Gew.-% | - | - | - | - | - | - | - | 10 | 15 |
| Hitzestabilisator (d1) | Gew.-% | 0,5 | 0,5 | 0,5 | 0,5 | 0,5 | 0,5 | 0,5 | 0,5 | 0,5 |
| Hitzestabilisator (d2) | Gew.-% | 0,1 | 0,1 | 0,1 | 0,1 | 0,1 | 0,1 | 0,1 | 0,1 | 0,1 |
| UV-Stabilisator (d3) | Gew.-% | 0,3 | 0,3 | 0,3 | 0,3 | 0,3 | 0,3 | 0,3 | 0,3 | 0,3 |
| UV-Stabilisator (d4) | Gew.-% | 0,1 | 0,1 | 0,1 | 0,1 | 0,1 | 0,1 | 0,1 | 0,1 | 0,1 |

| **Tests** | | | | | | | | | | |
|---|---|---|---|---|---|---|---|---|---|---|
| Dichte | g/cm³ | 0,916 | 0,845 | 0,900 | 0,940 | 0,882 | 0,937 | 0,895 | 0,990 | 0,977 |
| Zug-E-Modul | MPa | 1680 | 1480 | 1720 | 2220 | 1980 | 2210 | 1720 | 1540 | - |
| Reißfestigkeit | MPa | 42 | 33 | 41 | 56 | 45 | 38 | 43 | 38 | - |
| Reißdehnung | % | 11 | 6 | 16 | 6 | 4 | 5 | 13 | 10 | - |
| Schlagzähigkeit, Charpy 23 °C | kJ/m² | 66 | 38 | 115 | 50 | 33 | 60 | 65 | 49 | - |

**Tabelle 4**

| | | **Beispiele** | | | | | | |
|---|---|---|---|---|---|---|---|---|
| **Komponenten** | **Einheit** | **10** | **11** | **12** | **13** | **14** | **15** | **16** |
| PA 12 (a5) | Gew.-% | 54 | 43 | 54 | 43 | 43 | 43 | 47 |
| PA 12 (a6) | Gew.-% | 18 | 14 | 18 | 14 | 14 | 14 | 15 |
| PA MACM12 (a1) | Gew.-% | - | - | - | - | 10 | 10 | - |
| E/P-E/B-MAH (b2) | Gew.-% | - | - | 15 | 30 | - | 20 | 30 |
| E/B-MAH (b3) | Gew.-% | 15 | 30 | - | - | 20 | - | - |
| Hohlglaskugeln (c1) | Gew.-% | 10 | 10 | 10 | 10 | 10 | 10 | 5 |
| Hitzestabilisator (d1) | Gew.-% | 0,5 | 0,5 | 0,5 | 0,5 | 0,5 | 0,5 | 0,5 |
| Hitzestabilisator (d2) | Gew.-% | 0,1 | 0,1 | 0,1 | 0,1 | 0,1 | 0,1 | 0,1 |
| UV-Stabilisator (d3) | Gew.-% | 0,3 | 0,3 | 0,3 | 0,3 | 0,3 | 0,3 | 0,3 |
| TiO₂-Masterbatch (d5) | Gew.-% | 2,0 | 2,0 | 2,0 | 2,0 | 2,0 | 2,0 | 2,0 |

| **Tests** | | | | | | | | |
|---|---|---|---|---|---|---|---|---|
| Dichte | g/cm³ | 0.889 | 0.870 | 0.888 | 0.873 | 0.881 | 0.885 | 0.895 |
| Zug-E-Modul | MPa | 1450 | 1050 | 1400 | 850 | 1240 | 1310 | 790 |
| Reißfestigkeit | MPa | 32 | 25 | 32 | 22 | 26 | 27 | 25 |
| Reißdehnung | % | 95 | 130 | 30 | 140 | 50 | 65 | 160 |
| Kerb-Schlagzähigkeit, Charpy 23 °C | kJ/m² | 28 | 41 | 24 | 43 | 35 | 33 | 53 |

## Patentansprüche

1. Polyamidformmasse mit einer Dichte von maximal 0,970 g/cm³ bestehend aus
(a) 25 bis 90 Gew.-%, bezogen auf die Summe der Komponenten (a) bis (d), eines amorphen, mikrokristallinen oder teilkristallinen Polyamids oder Mischungen hiervon,
(b) 5 bis 30 Gew.-%, bezogen auf die Summe der Komponenten (a) bis (d), mindestens eines Schlagzähmodifikators,
(c) 5 bis 30 Gew.-%, bezogen auf die Summe der Komponenten (a) bis (d), Hohlglaskugeln sowie
(d) 0 bis 15 Gew.-%, bezogen auf die Summe der Komponenten (a) bis (d), weiterer Zusatzstoffe,
wobei sich die Komponenten (a) bis (d) zu 100 Gew.-% addieren.

2. Polyamidformmasse nach Anspruch 1,
**dadurch gekennzeichnet, dass** die Komponente (a) eine Dichte von maximal 1,220 g/cm³, bevorzugt von maximal 1,160 g/cm³, besonders bevorzugt von maximal 1,100 g/cm³, und ganz besonders bevorzugt von maximal 1,060 g/cm³ aufweist.

3. Polyamidformmasse nach einem der vorhergehenden Ansprüche, **dadurch gekennzeichnet, dass** die Komponente (a) eine Mischung von amorphen und/oder mikrokristallinen Polyamiden mit teilkristallinen Polyamiden ist.

4. Polyamidformmasse nach einem der Ansprüche 1 oder 2,
**dadurch gekennzeichnet, dass** die Komponente (a) ein amorphes oder mikrokristallines Polyamid oder eine Mischungen von diesen ist.

5. Polyamidformmasse nach einem der Ansprüche 1 oder 2,
**dadurch gekennzeichnet, dass** die Komponente (a) ein teilkristallines Polyamid oder eine Mischung von teilkristallinen Polyamiden ist.

6. Polyamidformmasse nach einem der vorhergehenden Ansprüche, **dadurch gekennzeichnet, dass** das amorphe oder mikrokristalline Polyamid ausgewählt ist aus der Gruppe bestehend aus PA 61, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PATMDC10, PA TMDC12, PATMDC14, PA TMDC18, PA PACM12, PA PACM14, PA PACM18, PA PACM10/11, PA PACM10/12, PA PACM 12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PATMDC36, PA MACMI/MACM36, PA 6I/MACMI/12, PA MACMT/MACM36, PA MACMI/ MACMT/12, PA 6I/6T/MACMI/MACMT, PA 6I/6T/MACMI/ MACMT/12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM18/1018, PA 6I/6T/MACMI/MACMT/MACM12/612, PA 6I/6T/MACMI/ MACMT/MACM12, PA MACMI/MACMT/MACM12/12, PA MACMI/ MACMT/MACM12, PA 6I/6T/MACMI/MACMT/12, PA 6I/6T/6N/ MACMI/MACMT/MACMN, PA TMDC12/TMDCT/TMDC36, PA TMDC12/TMDCI, PA TMDC12/TMDCI/TMDC36 und PA TMDC12/TMDCT und Mischungen oder Copolymeren hiervon, wobei das MACM bis zu maximal 35 Mol-% durch PACM und/oder TMDC ersetzt sein kann, bezogen auf die Summe der molaren Anteile aller Monomere von 100 Mol-% und/oder das Laurinlactam ganz oder teilweise durch Caprolactam ersetzt sein kann,
und/oder
das teilkristalline Polyamid ausgewählt ist aus der Gruppe bestehend aus PA 6, PA 46, PA 49, PA 410, PA 411, PA 412, PA 413, PA 414, PA 415, PA 416, PA 418, PA 436, PA 56, PA 510, PA 66, PA 69, PA 610, PA 611, PA 612, PA 613, PA 614, PA 615, PA 616, PA 617, PA 618, PA 1010, PA 66/6, PA 6/66/610, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM13, PA PACM14, PA PACM15, PA PACM16, PA PACM17, PA PACM18, PA PACM36, Polyamiden mit einer 4T-Wiederholungseinheit, Polyamiden mit einer 5T-Wiederholungseinheit, Polyamiden mit einer 6T-Wiederholungseinheit, Polyamiden mit einer 8T-Wiederholungseinheit, Polyamiden mit einer 9T-Wiederholungseinheit, Polyamiden mit einer 10T-Wiederholungseinheit, PA 4T/6T, PA 4T/8T, PA 6T/8T, PA 4T/MPMDT, PA 4T/4I, PA 5T/5I, PA 6T/6I, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 10T/6T/1012/612, Polyetheramiden, Polyetheresteramiden, Polyesteramiden und deren Mischungen oder Copolymeren.

7. Polyamidformmasse nach einem der vorhergehenden Ansprüche, **dadurch gekennzeichnet, dass** das amorphe oder mikrokristalline Polyamid maximal 49 Mol-% aromatischer Dicarbonsäuren enthält, bezogen auf die Summe aller enthaltenen Monomeren von 100 Mol-%.

8. Polyamidformmasse nach einem der vorhergehenden Ansprüche, **dadurch gekennzeichnet, dass** die Polyamidformmasse von 43 bis 83,9 Gew.-%, insbesondere von 54 bis 79,7 Gew.-% der Komponente (a), jeweils bezogen auf die Summe der Komponenten (a) bis (d), enthält.

9. Polyamidformmasse nach einem der vorhergehenden Ansprüche, **dadurch gekennzeichnet, dass** der mindestens eine Schlagzähmodifikator ausgewählt ist aus der Gruppe bestehend aus Polyethylen, Polypropylen, Polyolefin-Copolymeren, Acrylat-Copolymeren, Acrylsäure-Copolymeren, Vinylacetat-Copolymeren, Styrol-Copolymeren, Styrol-Blockcopolymeren, ionischen Ethylen-Copolymeren in denen die Säuregruppen teilweise mit Metallionen neutralisiert sind, Kern-Mantel-Schlagzähmodifikatoren und Mischungen davon.

10. Polyamidformmasse nach einem der vorhergehenden Ansprüche, **dadurch gekennzeichnet, dass** die Polyamidformmasse von 8 bis 22 Gew.-%, insbesondere von 10 bis 20 Gew.-% des mindestens einen Schlagzähmodifikators, jeweils bezogen auf die Summe der Komponenten (a) bis (d), enthält.

11. Polyamidformmasse nach einem der vorhergehenden Ansprüche, **dadurch gekennzeichnet, dass** der mindestens eine Schlagzähmodifikator eine Dichte von maximal 1,000 g/cm³, bevorzugt von maximal 0,950 g/cm³ und besonders bevorzugt von maximal 0,915 g/cm³ und ganz besonders bevorzugt von maximal 0,890 g/cm³ aufweist.

12. Polyamidformmasse nach einem der vorhergehenden Ansprüche, **dadurch gekennzeichnet, dass** die Polyamidformmasse von 8 bis 25 Gew.-%, insbesondere von 10 bis 20 Gew.-%, jeweils bezogen auf die Summe der Komponenten (a) bis (d), Hohlglaskugeln enthält.

13. Polyamidformmasse nach einem der vorhergehenden Ansprüche, **dadurch gekennzeichnet, dass** die Hohlglaskugeln eine Druckfestigkeit von mindestens 100 MPa und insbesondere bevorzugt von mindestens 110 MPa aufweisen.

14. Polyamidformmasse nach einem der vorhergehenden Ansprüche, **dadurch gekennzeichnet, dass** die Zusatzstoffe ausgewählt sind aus der Gruppe bestehend aus anorganischen Stabilisatoren, organischen Stabilisatoren, insbesondere Antioxidantien, Antiozonantien, Lichtschutzmittel, UV-Stabilisatoren, UV-Absorber oder UV-Blocker, IR-Absorber, NIR-Absorber, Antiblockmitteln, Nukleierungsmitteln, Kristallisationsbeschleunigern, Kristallisationsverzögerern, Kondensationskatalysatoren, Kettenreglern, Entschäumern, kettenverlängernden Additiven, Leitfähigkeitsadditiven, Trennmitteln, Gleitmitteln, Farbstoffen, Markierungsmitteln, anorganischen Pigmenten, organischen Pigmenten, Ruß, Graphit, Kohlenstoffnanoröhrchen, Graphen, Kohlenstofffasern, Titandioxid, Zinksulfid, Zinkoxid, Bariumsulfat, photochromen Agenzien, Antistatika, Entformungsmitteln, optischen Aufhellern, halogenfreien Flammschutzmitteln, metallischen Pigmenten, Metallflittern, metallbeschichteten Partikeln, Füll- und Verstärkungsstoffen, natürlichen Schichtsilikaten, synthetischen Schichtsilikaten und deren Mischungen.

15. Formkörper herstellbar aus einer Polyamidformmasse nach einem der vorhergehenden Ansprüche.

16. Verwendung der Formmassen nach einem der Ansprüche 1 bis 14 zur Herstellung von Formkörpern, insbesondere Folien, Profilen, Rohren, Behältern, Halbzeugen, Fertigteilen oder Hohlkörpern sowie zur Beschichtung von Formkörpern.

## Claims

1. Polyamide moulding compound with a density of at most 0.970 g/cm³, consisting of
(a) 25 to 90% by weight, relative to the sum of components (a) to (d), of an amorphous, microcrystalline or partially crystalline polyamide or mixtures hereof,
(b) 5 to 30% by weight, relative to the sum of components (a) to (d), of at least one impact modifier,
(c) 5 to 30% by weight, relative to the sum of components (a) to (d), of hollow glass balls, and also
(d) 0 to 15% by weight, relative to the sum of components (a) to (d), of further additives,
components (a) to (d) adding up to 100% by weight.

2. Polyamide moulding compound according to claim 1, **characterised in that** component (a) has a density of at most 1.220 g/cm³, preferably of at most 1.160 g/cm³, particularly preferably of at most 1.100 g/cm³, and very particularly preferably of at most 1.060 g/cm³.

3. Polyamide moulding compound according to one of the preceding claims,
**characterised in that** component a) is a mixture of amorphous and/or microcrystalline polyamides with partially crystalline polyamides.

4. Polyamide moulding compound according to one of the claims 1 or 2,
**characterised in that** component a) is an amorphous or microcrystalline polyamide or a mixture of these.

5. Polyamide moulding compound according to one of the claims 1 or 2,
**characterised in that** component a) is a partially crystalline polyamide or a mixture of partially crystalline polyamides.

6. Polyamide moulding compound according to one of the preceding claims,
**characterised in that** the amorphous or microcrystalline polyamide is selected from the group consisting of PA 61, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PA TMDC10, PA TMDC12, PA TMDC14, PA TMDC18, PA PACM12, PA PACM14, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM18/1018, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36 and PA TMDC12/TMDCT and mixtures or copolymers hereof, the MACM may be replaced by up to at most 35% by mol by PACM and/or TMDC, relative to the sum of the molar proportions of all monomers of 100% by mol, and/or the laurin lactam may be replaced entirely or partially by caprolactam,
and/or
the partially crystalline polyamide is selected from the group consisting of PA 6, PA 46, PA 49, PA 410, PA 411, PA 412, PA 413, PA 414, PA 415, PA 416, PA 418, PA 436, PA 56, PA 510, PA 66, PA 69, PA 610, PA 611, PA 612, PA 613, PA 614, PA 615, PA 616, PA 617, PA 618, PA 1010, PA 66/6, PA 6/66/610, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM 13, PA PACM 14, PA PACM 15, PA PACM16, PA PACM 17, PA PACM18, PA PACM36, polyamides with a 4T repetition unit, polyamides with a 5T repetition unit, polyamides with a 6T repetition unit, polyamides with an 8T repetition unit, polyamides with a 9T repetition unit, polyamides with a 10T repetition unit, PA 4T/6T, PA 4T/8T, PA 6T/8T, PA 4T/MPMDT, PA 4T/4I, PA 5T/5I, PA 6T/6I, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA6T/8T/10T, PA 4T/6T/MPMDT, PA 6T/6, PA 6T/66, PA 4T/66, PA 5T/66, PA 6T/6I/6, PA 10T/6T/1012/612, polyether amides, polyether ester amides, polyester amides and mixtures or copolymers thereof.

7. Polyamide moulding compound according to one of the preceding claims,
**characterised in that** the amorphous or microcrystalline polyamide comprises at most 49% by mol of aromatic dicarboxylic acids, relative to the sum of all contained monomers of 100% by mol.

8. Polyamide moulding compound according to one of the preceding claims,
**characterised in that** the polyamide moulding compound comprises from 43 to 83.9% by weight, in particular from 54 to 79.7% by weight, of component (a), respectively relative to the sum of components (a) to (d).

9. Polyamide moulding compound according to one of the preceding claims,
**characterised in that** the at least one impact modifier is selected from the group consisting of polyethylene, polypropylene, polyolefin copolymers, acrylate copolymers, acrylic acid copolymers, vinyl acetate copolymers, styrene copolymers, styrene block copolymers, ionic ethylene copolymers in which the acid groups are neutralised partially with metal ions, core-shell impact modifiers and mixtures thereof.

10. Polyamide moulding compound according to one of the preceding claims,
**characterised in that** the polyamide moulding compound comprises from 8 to 22% by weight, in particular from 10 to 20% by weight, of the at least one impact modifier, respectively relative to the sum of components (a) to (d).

11. Polyamide moulding compound according to one of the preceding claims,
**characterised in that** the at least one impact modifier has a density of at most 1.000 g/cm³, preferably of at most 0.950 g/cm³ and particularly preferably of at most 0.915 g/cm³ and very particularly preferably of at most 0.890 g/cm³.

12. Polyamide moulding compound according to one of the preceding claims,
**characterised in that** the polyamide moulding compound comprises from 8 to 25% by weight, in particular from 10 to 20% by weight, respectively relative to the sum of components (a) to (d), of hollow glass balls.

13. Polyamide moulding compound according to one of the preceding claims,
**characterised in that** the hollow glass balls have a pressure resistance of at least 100 MPa and particularly preferably of at least 110 Mpa.

14. Polyamide moulding compound according to one of the preceding claims,
**characterised in that** the additives are selected from the group consisting of inorganic stabilisers, organic stabilisers, in particular antioxidants, antiozonants, light-protecting means, UV stabilisers, UV absorbers or UV blockers, IR absorbers, NIR absorbers, anti-blocking agents, nucleation agents, crystallisation accelerators, crystallisation retardants, condensation catalysts, chain regulators, defoamers, chain-lengthening additives, conductivity additives, separation means, lubricants, colourants, marking agents, inorganic pigments, organic pigments, carbon black, graphite, carbon nanotubes, graphene, carbon fibres, titanium dioxide, zinc sulphide, zinc oxide, barium sulphate, photochromic agents, anti-static agents, mould-release agents, optical brighteners, halogen-free flame retardants, metallic pigments, metallic flakes, metal-coated particles, filling- and reinforcing materials, natural layer silicates, synthetic layer silicates and mixtures thereof.

15. Moulded articles producible from a polyamide moulding compound according to one of the preceding claims.

16. Use of the moulding compounds according to one of the claims 1 to 14 for the production of moulded articles, in particular foils, profiles, pipes, containers, semi-finished products, finished parts or hollow articles and also for coating moulded articles.

## Revendications

1. Mélange à mouler de polyamides, ayant une masse volumique maximale de 0,970 g/cm³, constitué de
(a) 25 à 90 % en poids, par rapport à la somme des composants (a) à (d), d'un polyamide amorphe, microcristallin ou partiellement cristallin, ou de mélanges de celui-ci,
(b) 5 à 30 % en poids, par rapport à la somme des composants (a) à (d), d'au moins un modifiant choc,
(c) 5 à 30 % en poids, par rapport à la somme des composants (a) à (d), de billes de verre creuses, ainsi que
(d) 0 à 15 % en poids, par rapport à la somme des composants (a) à (d), d'additifs supplémentaires,
la somme des composants (a) à (d) étant de 100 % en poids.

2. Mélange à mouler de polyamides selon la revendication 1, **caractérisé en ce que** le composant (a) présente une masse volumique au maximum de 1,220 g/cm³, de préférence au maximum de 1,160 g/cm³, d'une manière particulièrement préférée au maximum de 1,100 g/cm³ et d'une manière tout particulièrement préférée au maximum de 1,060 g/cm³.

3. Mélange à mouler de polyamides selon l'une des revendications précédentes, **caractérisé en ce que** le composant (a) est un mélange de polyamides amorphes et/ou microcristallins et de polyamides partiellement cristallins.

4. Mélange à mouler de polyamides selon l'une des revendications 1 ou 2, **caractérisé en ce que** le composant (a) est un polyamide amorphe ou microcristallin, ou un mélange de celui-ci.

5. Mélange à mouler de polyamides selon l'une des revendications 1 ou 2, **caractérisé en ce que** le composant (a) est un polyamide cristallin ou un mélange de polyamides partiellement cristallins.

6. Mélange à mouler de polyamides selon l'une des revendications précédentes, **caractérisé en ce que** le polyamide amorphe ou microcristallin est choisi dans le groupe consistant en PA 6I, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PA TMDC10, PA TMDC12, PA TMDC14, PA TMDC18, PA PACM12, PA PACM14, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/MACM12, PA MACMT/MACMN, PA MACM36, PA TMDC36, PA MACMI/MACM36, PA 6I/MACMI/12, PA MACMT/MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM18/1018, PA 6I/6T/MACMI/MACMT/MACM12/612, PA 6I/6T/MACMI/MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36 et PA TMDC12/TMDCT, et les mélanges ou copolymères de ceux-ci, le MACM pouvant, jusqu'à un maximum de 35 % en moles par rapport à la somme des proportions molaires de l'ensemble des monomères, égale à 100 % en moles, être remplacé par du PACM et/ou du TMDC, et/ou le laurinelactame en totalité ou en partie par du caprolactame,
et/ou
le polyamide partiellement cristallin est choisi dans le groupe consistant en PA 6, PA 46, PA 49, PA 410, PA 411, PA 412, PA413, PA 414, PA415, PA 416, PA418, PA 436, PA 56, PA 510, PA 66, PA 69, PA 610, PA 611, PA 612, PA 613, PA 614, PA 615, PA 616, PA 617, PA 618, PA 1010, PA 66/6, PA 6/66/610, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM13, PA PACM14, PA PACM15, PA PACM16, PA PACM17, PA PACM18, PA PACM36, les polyamides ayant un motif répétitif 4T, les polyamides ayant un motif répétitif 5T, les polyamides ayant un motif répétitif 6T, les polyamides ayant un motif répétitif 8T, les polyamides ayant un motif répétitif 9T, les polyamides ayant un motif répétitif 10T, PA 4T/6T, PA 4T/8T, PA 6T/8T, PA 4T/MPMDT, PA 4T/4I, PA 5T/5I, PA 6T/6I, PA 9T/MODT, PA 9T/9I, PA 10T, PA 10T/6T, PA 10T/6T/10I/6I, PA 12T, PA MPMDT/6T, PA 10T/10I, PA 12T/12I, PA 4T/6T/8T, PA 4T/6T/10T, PA 4T/8T/10T, PA 6T/8T/10T, PA 4T/6T/MPMDT, PA 6T/6, PA 6T/66, PA 4T/66, PA 5T/66, PA 6T/6I/6, PA 10T/6T/1012/612, les polyétheramides, les polyétherestéramides, les polyesteramides, et les mélanges et copolymères de ceux-ci.

7. Mélange à mouler de polyamides selon l'une des revendications précédentes, **caractérisé en ce que** le polyamide amorphe ou microcristallin contient au maximum 49 % en moles d'acides dicarboxyliques aromatiques, par rapport à la somme de tous les monomères contenus, qui est de 100 % en moles.

8. Mélange à mouler de polyamides selon l'une des revendications précédentes, **caractérisé en ce que** le mélange à mouler de polyamides contient de 43 à 83,9 % en poids, en particulier de 54 à 79,7 % en poids du composant (a), dans chaque cas par rapport à la somme des composants (a) à (d).

9. Mélange à mouler de polyamides selon l'une des revendications précédentes, **caractérisé en ce que** l'au moins un modifiant choc est choisi dans le groupe consistant en le polyéthylène, le polypropylène, les copolymères de polyoléfines, les copolymères d'acrylates, les copolymères de l'acide acrylique, les copolymères de l'acétate de vinyle, les copolymères du styrène, les copolymères à blocs du styrène, les copolymères de l'éthylène ioniques dans lesquels les groupes acides sont en partie neutralisés par des ions métalliques, les modifiants choc coeur-gaine, et les mélanges de ceux-ci.

10. Mélange à mouler de polyamides selon l'une des revendications précédentes, **caractérisé en ce que** le mélange à mouler de polyamides contient de 8 à 22 % en poids, en particulier de 10 à 20 % en poids, de l'au moins un modifiant choc, dans chaque cas par rapport à la somme des composants (a) à (d).

11. Mélange à mouler de polyamides selon l'une des revendications précédentes, **caractérisé en ce que** l'au moins un modifiant choc présente une masse volumique au maximum de 1,000 g/cm³, de préférence au maximum de 0,950 g/cm³ et d'une manière particulièrement préférée au maximum de 0,915 g/cm³ et d'une manière tout particulièrement préférée au maximum de 0,890 g/cm³.

12. Mélange à mouler de polyamides selon l'une des revendications précédentes, **caractérisé en ce que** le mélange à mouler de polyamides contient 8 à 25 % en poids, en particulier 10 à 20 % en poids, dans chaque cas par rapport à la somme des composants (a) à (d), de billes de verre creuses.

13. Mélange à mouler de polyamides selon l'une des revendications précédentes, **caractérisé en ce que** les billes de verre creuses présentent une résistance à la compression d'au moins 100 MPa et d'une manière particulièrement préférée d'au moins 110 MPa.

14. Mélange à mouler de polyamides selon l'une des revendications précédentes, **caractérisé en ce que** les additifs sont choisis dans le groupe consistant en les stabilisants inorganiques, les stabilisants organiques, en particulier les antioxydants, les antiozonants, les agents photoprotecteurs, les stabilisants UV, les absorbants UV ou les agents bloquant les UV, les absorbants IR, les absorbants NIR, les agents anti-adhérence de contact, les agents de nucléation, les accélérateurs de cristallisation, les retardateurs de cristallisation, les catalyseurs de condensation, les régulateurs de chaîne, les antimoussants, les additifs prolongateurs de chaîne, les additifs de conductivité, les agents de démoulage, les lubrifiants, les colorants, les agents de marquage, les pigments inorganiques, les pigments organiques, le noir de carbone, le graphite, les nanotubes de carbone, le graphène, les fibres de carbone, le dioxyde de titane, le sulfure de zinc, l'oxyde de zinc, le sulfate de baryum, les agents photochromiques, les antistatiques, les agents de démoulage, les azurants optiques, les agents d'ignifugation non halogénés, les pigments métalliques, les paillettes métalliques, les particules à enrobage métallique, les matières de remplissage et de renfort, les phyllosilicates naturels, les phyllosilicates synthétiques et les mélanges de ceux-ci.

15. Objet moulé pouvant être fabriqué à partir d'un mélange à mouler de polyamides selon l'une des revendications précédentes.

16. Utilisation des mélanges à mouler selon l'une des revendications 1 à 14 pour la fabrication d'objets moulés, en particulier de feuilles, de profilés, de tubes, de récipients, de semi-produits, de pièces finies ou de corps creux, ainsi que pour le revêtement d'objets moulés.
